# EUROPEAN PATENT SPECIFICATION

(11) **EP 3 030 341 B1**
(45) Date of publication and mention of the grant of the patent: **27.09.2017**
(21) Application number: 14750715.6
(22) Date of filing: 08.08.2014
(51) Int. Cl.: B01D 53/32, B01D 53/94, F01N 3/00

(54) **METHOD AND SYSTEM FOR THE PURIFICATION OF EXHAUST GAS WITH AN ELECTROCHEMICAL CELL**
VERFAHREN UND SYSTEM ZUR ABGASREINIGUNG MIT EINER ELEKTROCHEMISCHEN ZELLE
PROCÉDÉ ET SYSTÈME POUR LA PURIFICATION DE GAZ D'ÉCHAPPEMENT AVEC UNE CELLULE ÉLECTROCHIMIQUE

(30) Priority: 08.08.2013 EP 13003973
(43) Date of publication of application: 15.06.2016
(73) Proprietor: Danmarks Tekniske Universitet, 2800 Kgs. Lyngby (DK)
(72) Inventor: KAMMER HANSEN, Kent, DK-3650 Ølstykke (DK); MOGENSEN, Mogens, DK-3540 Lynge (DK); SHAO, Jing, Shenzhen, Guangdong P.R.China, 518060 (CN)
(74) Representative: Høiberg P/S
(86) International application number: PCT/EP2014/067070
(87) International publication number: WO 2015/018926

(56) References cited:
- EP-A1- 2 103 719
- EP-A1- 2 380 663
- WO-A1-2010/099275
- WO-A2-2012/037526
- US-A1- 2004 229 031

## Description

### Field of invention

The present invention relates to a method for purification of exhaust gas involving the electrochemical reduction of nitrogen oxides to nitrogen, as well as a system useful therefor.

### Background

In recent years, particulates and gaseous species, such as nitrogen oxides, for example contained in exhaust gases of automobiles or diesel engines, have raised serious problems as environmental contaminants. For this reason, filters and gas converters have been proposed, which allow exhaust gases to pass through a chemical or electrochemical reactor, so that the exhaust gas is purified, by means of filtration or conversion.

WO 2007/125394 discloses an exhaust gas purification system and a method for purifying exhaust gas. The system is characterized in that it employs an electrochemical purification apparatus, where on the cathode side exhaust gas, including nitrogen oxides, is purified in particular by reducing nitrogen oxides to nitrogen. This system, however, requires a hydrogen gas generator in order to provide hydrogen-rich gas to the anode side of the electrochemical purification apparatus in order to provide the overall required oxidation reaction.

EP 2063481 relates to an electrochemical device and exhaust gas purification apparatus. It comprises an anode and a cathode with an electrolyte layer provided there between. The electrolyte layer comprises alternating layers or two types of electrolytes formed in the shape of plates, being alternating a proton conductor and an oxygen ion conductor. The exhaust gas purification apparatus disclosed in EP 2063481 comprises high numbers of such electrochemical device where at the anode carbon is converted to carbon dioxide while nitrogen oxides are converted to nitrogen at the cathode. Essential for the performance of these devices is the presence of precious metals on the cathode, including platinum coated supports as well as rhodium containing materials.

EP 223732 describes an exhaust gas purification system comprising an electrochemical reactor. The reactor includes an electrochemical cell comprising a cathode, an anode and a polyelectrolyte membrane located there between.

US 2006/0118409 discloses a chemical reaction system for efficiently excluding nitrogen oxides when excess oxygen is present in exhaust gases. This document discloses an electrochemical cell including a working electrode layer, a cathode and an ion conduction phase together with an anode. Nitrogen oxides contained in the flue gas are brought into contact with the cathode side of the disclosed electrochemical cell in order to provide reduction to nitrogen.

EP 2103719 discloses an electrochemical device for soot and NOₓ purification. The device is a multi-layered structure comprising a symmetrical construction having an electrolyte layer sandwiched between a cathode and an anode layer. On the cathode side, NO is reduced to N₂. On the anode side, soot is oxidized to CO₂. The layers are of alternating composition, wherein the first layer comprises particles of a first material, and the second layer comprises particles of a second material. Some of the layers may in addition comprise a catalyst material, and the use of alkali metal or alkali earth metal oxides as NO getter materials is mentioned.

Other prior art techniques for the removal of nitrogen oxides from exhaust gases employ external chemical reducing agents, such as urea-derived agents.

The prior art systems and methods for purifying exhaust gases, in particular for removing nitrogen oxides, however, still suffer from drawbacks in that either additional external reducing agents are required, or other external agents such as hydrogen-rich gas exemplified in the prior art cited above. Most of the techniques furthermore require the presence of precious metals, such as platinum which increases costs and does not show much promise for the feature in view of scarce resources for such precious metals (combined with the problems of recycling such precious metals from exhaust gas purification systems). In addition, activity of electrochemical exhaust gas purification systems in the prior art often is not yet fully satisfactory so that further improvements are required.

### Objects of the present invention

In view of the difficulties and drawbacks associated with the prior art systems discussed above, it was the object of the present invention to provide an effective method for purifying exhaust gases, in particular for reducing nitrogen oxides to nitrogen.

It furthermore was an object of the present inventors to provide a method which enables the use of materials which can be produced reliably and stably at low cost, thereby avoiding the use of precious metals.

Furthermore, the inventors aimed at providing a method and system for exhaust gas purification with a high activity which furthermore allows a simple construction of exhaust gas purification systems.

Furthermore, an object of the invention is to provide a method and system for exhaust gas purification with a high degree of robustness during fabrication and operation.

Finally, it was also an object of the present inventors to provide a method and a system for exhaust gas purification, which allows a simultaneous purification of the exhaust gas with respect to nitrogen oxides but also with respect to carbon pollutants contained in exhaust gas.

### Summary of the invention

In order to solve the above objects, i.e. at least one of the objects exemplified above, the inventors have proposed the method for purification of exhaust gas as identified in claim 1. Preferred embodiments are described in subclaims 2-11 as well as in the following description. The inventors furthermore provide a system for purification of exhaust gas, which is in particular suitable for carrying out the method of the present invention. This system is described in claim 13. Preferred embodiments thereof are described in claims 14-23 as well as in the following description. The use of the method and the system is furthermore described in the claims as well as in the following description.

### Brief description of the figures

**Figure 1** shows a schematic view of an exhaust gas purification system in accordance with the present invention.
**Figure 2** shows a system in accordance with the present invention where simultaneously nitrogen oxides as well as carbon pollutants are purified.
**Figure 3** shows the temperature dependency of the NOₓ conversion of test gases (A) and (B).
**Figure 4** shows the temperature dependency of the current efficiency of test gases (A) and (B).
**Figure 5** shows the voltage dependency on the NOₓ conversion and current efficiency of test gases (A) and (B).
**Figure 6** shows the frequency dependency on the NOₓ conversion and the current efficiency of test gas (A) at 400 °C.
**Figure 7** shows the frequency dependency on the NOₓ conversion and the current efficiency of test gas (B) at 400 °C.

### Detailed description of the invention

In the following, a detailed description of the present invention is provided, mainly focusing on the method in accordance with the present invention. All preferred embodiments disclosed in the context of the method in accordance with the present invention relate to materials and systems to be employed in accordance with the method of the present invention are likewise also applicable for the system in accordance with the present invention, which will also be described below.

The method for purification of exhaust gas is conducted in a system, comprising an electrochemical cell, wherein the electrochemical cell comprises at least three layers: a porous ceramic anode layer, a porous ceramic electrolyte layer and a porous ceramic cathode layer, in this order, wherein the cell is free of noble metals, and wherein the porous ceramic cathode layer comprises an alkaline or alkaline-earth oxide or mixture thereof, and wherein the porous ceramic anode layer comprises a ceramic with oxidizing properties. The method comprises at least two steps: a first step of passing the exhaust gas through the porous ceramic anode layer in order to oxidize nitrogen monoxide to nitrogen dioxide; and subsequently passing the exhaust gas through the porous ceramic cathode layer in order to reduce nitrogen dioxide to nitrogen.

The porous ceramic cathode layer comprises an alkaline or alkaline-earth oxide or a mixture thereof, preferably an alkaline-earth oxide. In a particularly preferred embodiment, the porous ceramic cathode layer comprises BaO. The alkaline or alkaline-earth oxide is an essential component for the electrochemical reduction of nitrogen dioxide to nitrogen since it ensures nitrogen dioxide storage on the cathode.

The porous ceramic anode comprises a ceramic with oxidizing properties. By the term "oxidizing properties" as used herein is meant a material which is capable of oxidizing nitrogen monoxide to nitrogen dioxide, such as a catalytic material and/or a current-carrying phase. In one embodiment of the invention, the ceramic anode comprises a composite mixture of LSM (strontium doped lanthanum manganite) and CGO (gadolinium doped ceria), where LSM is the main current-carrying phase. In a further embodiment of the invention, the porous ceramic anode layer in addition comprises a non-noble metal catalytic material, such as Co₃O₄ or ZnFe₂O₄, which can facilitate the oxidation of NO to NO₂. The ceramic with oxidizing properties is an essential component for the electrochemical oxidation of the nitrogen monoxide to nitrogen dioxide.

In another embodiment of the invention, the porous ceramic anode layer may optionally comprise an alkaline or alkaline-earth oxide. In a particularly preferred embodiment, the porous ceramic anode layer comprises BaO. In an embodiment of the invention, the same alkaline or alkaline-earth oxide is comprised within the anode and the cathode layer. This embodiment facilitates the manufacturing and operation of the purification system, since the anode layer is similar to the cathode layer, thus meaning that the cell is the same irrespective of the orientation of the cell, and thus the direction of the current can be reversed.

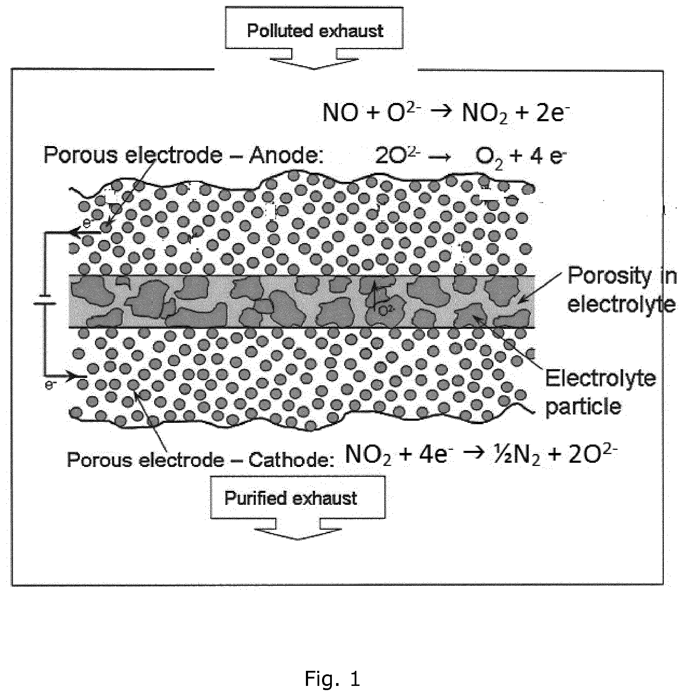

More specifically, the method in accordance with the present invention is characterized in that nitrogen monoxide is first oxidized to nitrogen dioxide at the anode side of the electrochemical exhaust gas purification system, followed by electrochemical reduction of nitrogen dioxide to nitrogen at the cathode side of the system. The inventors of the present application thereby make use of the finding that the activity of the electrochemical reduction of nitrogen dioxide to nitrogen is much higher than the activity of the electrochemical reduction of nitrogen monoxide to nitrogen. By ensuring that nitrogen monoxide is first oxidized to nitrogen dioxide, the present invention provides an improvement in a method for exhaust gas purification in that overall activity and efficiency can be improved. This gist of the present invention is schematically shown in Figure 1, where the anode side of an electrochemical system, nitrogen monoxide is oxidized to nitrogen dioxide. On the cathode side, the reduction of nitrogen dioxide to nitrogen occurs so that an overall purification is achieved. In contrast to this, the prior art is focused on one-step reduction of NO directly to N₂, which will be a less effective system than that demonstrated for the present invention.

NOx purification systems with high efficiency are known to typically require noble metals. The present invention provides a method for purification, where a high activity and efficiency can be obtained without the use of noble metals, thereby reducing the cost of the system and method.

The term "nitrogen oxides" in accordance with the present invention refers to NOₓ, which is a generic term for a mixture comprising nitrogen oxides, such as NO and NO₂. NOₓ is generally produced from the reaction of nitrogen and oxygen gases in the air during combustion, especially at high temperatures.

Accordingly, the present invention provides a method for the electrochemical reduction of nitrogen oxides, which comprises the steps of bringing the exhaust gas into contact with an anode of an electrochemical cell, where nitrogen monoxide is oxidized to nitrogen dioxide. Thereafter, the exhaust gas is brought into contact with a cathode of an electrochemical cell where reduction of the nitrogen dioxide to nitrogen is carried out. The electrochemical reduction may be performed in a net oxidizing atmosphere, such as in the presence of oxygen gas.

The method is carried out using an overall porous cell structure, comprising a porous ceramic anode layer, a porous ceramic electrolyte layer and a porous ceramic cathode layer, provided in this order, so that the exhaust gas can be reliably brought into contact with the anode first, followed by a passing through of the exhaust gas through the porous anode as well as through the porous electrolyte to the porous cathode, so that the anode reaction as well as the cathode reaction as described above can be carried out. By this manner the method is carried out in two separate functional units, the ceramic anode layer (the first functional unit) and the ceramic cathode layer (the second functional unit).

The materials for the electrodes as well as for the electrolyte are selected among ceramic-based materials. The pure ceramic nature of the electrochemical cell enables the manufacture of a porous cell structure in an easy, reliable and cost efficient way. The ceramic layers of the cell structure may be fabricated using cheap wet ceramic methods, such as screen printing, tape casting, lamination, and any combination thereof, all methods well-known to a person skilled in the art of ceramics. The layered cell is subsequently sintered, and the sintered porous electrodes may be added small amounts, such as below 5 wt% or more preferably 1-2 wt%, of alkaline or alkaline-earth oxide, by well-known post-sintering techniques such as infiltration or impregnation.

By the term "porous" as used herein is meant a material with open porosity, such that it is permeable to gas, and more specifically exhaust gas. Thereby, when exhaust gas is passed to one side of the system, a flux of gas will pass through the open porosity, and thereby through the system. The porosity of the system is preferably 30 to 50%.

In particular, the electrochemical cell is free of noble metals.

In one embodiment of the invention, the at least three layers of the cell comprise the same ceramic material. The "same ceramic material" will be abbreviated as SCM. In a further embodiment of the invention, the three layers of the cell comprise above 10 wt.% of SCM, such as 30, 50, 70, or 100 wt.%. In another embodiment of the invention, the three layers of the cell comprise different amounts of SCM, such as 35 wt.% SCM in the anode layer, 35 wt.% SCM in the cathode layer, and 100 wt.% SCM in the electrolyte layer. In a further embodiment, the anode layer and the cathode layer comprise composite materials, wherein one of the composite materials is the SCM. The presence of the same ceramic material within all three layers enables higher robustness of the cell during fabrication and operation. As will be known to a person skilled in the art of ceramics, high temperatures are necessary during the fabrication of the ceramic layers, and the temperatures will be different from the operational temperature of the purification device. If the same ceramic material is present in all layers, a higher robustness may be obtained since issues with different thermal expansion coefficients (TEC) of the layers followed by disintegration and delamination will be minimized if the materials are similar, i.e. have similar TEC.

In accordance with the method of the present invention, it is also preferred that the exhaust gas to be purified is first brought into contact withan adsorption layer, which increases the adsorption of nitrogen oxide to be purified. It is again preferred that the material for the adsorption layer is based on ceramic materials.

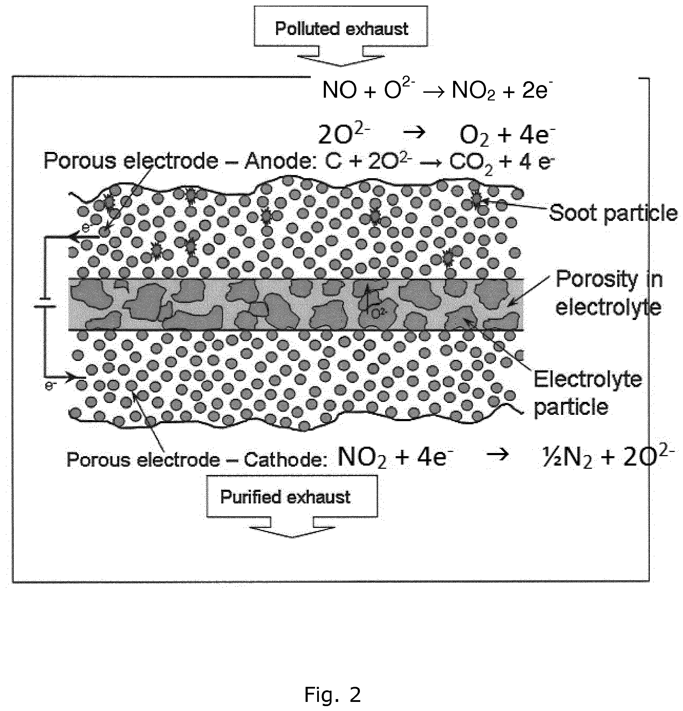

In a further preferred embodiment in accordance with the present invention, the anode is selected so that, in addition to the oxidation of nitrogen monoxide to nitrogen dioxide, an electrochemical oxidation of carbon pollutants to carbon dioxide can be carried out. Accordingly, a preferred method in accordance with the present invention comprises in addition to the electrochemical oxidation of nitrogen monoxide on the anode side of the electrochemical cell, a simultaneous oxidation of carbon to carbon dioxide on the anode side of the electrochemical cell. Since the overall structure of the electrochemical cell is porous, the oxidized carbon pollutants, i.e. carbon dioxide, passes together with the exhaust gas through the anode, through the electrolyte, as well as through the cathode to the exhaust gas exit side of the exhaust gas purification system in accordance with the present invention, as depicted in Figure 2.

The method in accordance with the present invention may be employed for exhaust gas purification systems, in particular systems employed in the automotive industry, but also in other fields, such as industrial exhaust gases, exhaust gases from ship engines as well as exhaust gases from private houses (single house heating systems etc.). In view of the fact that the method in accordance with the present invention also allows a simultaneous purification of carbon derived pollutants (soot) in addition to the purification with respect to nitrogen oxides, the method in accordance with the present invention may in particular be employed in the context of exhaust gas purification of diesel engines.

Due to the fact that the method in accordance with the present invention is carried out using porous ceramic materials, which can be produced at low cost and even for large size exhaust gas purification systems (taking furthermore into account that such ceramic materials are often able to withstand high temperatures and high exhaust gas velocities), the method in accordance with the present invention is also suitable for the purification of industrial exhaust gases, where often high volumes of exhaust gas need to be purified in short time. However, specifically due to the increasing demand of European legislation in the automotive industry, the method in accordance with the present invention is most suitable for application in the automotive sector. The method in accordance with the present invention enables the use of cheap materials, does not require the presence of noble or precious metals, has a rather low space requirement, and provides high effective purification (together with low fuel penalty in embodiments). Thus, an overall superior method system for exhaust gas purification in the automotive sector is provided by the present invention.

The present invention also provides a system for purification of exhaust gas, said system comprising at least three layers: a porous ceramic anode, a porous ceramic electrolyte layer and a porous ceramic cathode, in this order. As explained above in connection with the method in accordance with the present invention, the overall porous structure of these essential constituents of an electrochemical cell enables a highly efficient, reliable and low-cost exhaust gas purification.

Suitable materials for the electrodes as well as the electrolyte are described in the following.

The electrolyte material is a porous ceramic-based material and, in embodiments, the material for the electrolyte layer includes optionally doped zirconia, such as yttria-stabilized zirconia, doped ceria, LaGaO₃ based materials or Bi₂O₃ based materials, i.e. materials which are known to the average skilled person. Such materials may also be mixed with additional components, such as various oxides and mixtures thereof. Examples of suitable oxides are oxides based on aluminum, titanium, chromium, scandium, vanadium, tantalum, manganese, niobium, strontium, calcium, manganese, bismuth, lanthan, as well as mixed oxides such as MgTiO₃, CaAl₂O₄, LaAlO₃, YbCrO₃, ErCrO₄, NiTiO₃, NiCr₂O₄ etc.

In any case, the materials selected for the electrolyte layer is required to enable oxygen ion conductivity required for the method in accordance with the present invention, i.e. the electrolyte material has to provide the required transport of oxygen ions generated at the anode side to the cathode side in order to enable the respective electrode reactions.

Materials for the electrodes, i.e. the anode and cathode, respectively, may be selected among suitable porous ceramic materials known to the average skilled person. These materials enable the provision of a method for exhaust gas purification as well as a system for exhaust gas purification free of expensive precious metals. Suitable examples of porous ceramic materials for the electrode layers are again oxide-based ceramic materials, e.g. optionally doped zirconia, such as yttria-stabilized zirconia in combination with nickel oxide, as well as doped ceria and other doped zirconia materials as well as mixed oxides of various types which are known to the average skilled person in the field of ceramics. Preferred, however, are ceramic materials such as yttria-stabilized zirconia, which may be mixed/doped with other metals or metal oxides, such as nickel oxide.

A preferred example of a combination of materials for the electrochemical cell forming the central component for the exhaust gas purification system in accordance with the present invention is a structure where both electrode layers as well as the electrolyte layer are formed on the basis of yttria-stabilized zirconia or doped ceria, with yttria-stabilized zirconia being preferred. In this embodiment, the anode may comprise yttria-stabilized zirconia as the main component. The cathode layer may preferably comprise yttria-stabilized zirconia as the main component with a small amount of nickel oxide contained as dopant. In a further embodiment, the materials for the cathode and the anode are identical.

A preferred example of a combination of materials for the electrochemical cell forming the central component for the exhaust gas purification system is a structure where both electrode layers as well as the electrolyte layer are formed on the basis of gadolinia doped ceria (CGO). In this embodiment, the anode and the cathode are preferably identical, and may preferably comprise gadolinium doped ceria, doped such as CGO10 (Ce_{1.9}Gd_{0.1}O_{1.95}), as well as strontium doped lanthanum manganite (LSM), doped such as LSM15 (La_{0.85}Sr_{0.15}MnO_{3+d})- In a further embodiment, the anode and cathode composite layers comprise 35 wt% CGO10 and 65 wt% LSM15.

In accordance with the present invention, the materials for the anode layer, the electrolyte layer as well as the cathode layer have to be selected so that they provide the required functionality, namely oxygen ion conductivity for the electrolyte layer, suitability for the anode reaction for the anode layer and suitability for the cathode reaction for the cathode layer. Furthermore, the materials are selected so that an overall porous structure is formed, by product methods known to the average skilled person, in order to provide the overall porous system in accordance with the present invention.

### Examples

An electrochemical cell in accordance with the present invention is produced by the wet ceramic methods, screen printing, and tape casting of respectively the electrode layers and the electrolyte layer, followed by sintering. The cell structure of the electrochemical cell encompasses a porous ceramic cathode of LSM15/CG010 (La_{0.85}Sr_{0.15}MnO_{3+d}/Ce_{1.9}Gd_{0.1}O_{1.95}) and a porous ceramic anode of LSM15/CG010. The electrodes contain 65 wt% LSM15 and 35% CGO10. The thickness of the anode and cathode layers is 45 µm, respectively, and the layers are fabricated by screen-printing an organic ink comprising the LSM15/CG010 powders, onto a dense ceramic CGO10 electrolyte layer (thickness: 300 µm) fabricated by tape casting of an organic slurry comprising the CGO10 powder. The layers are sintered and the anode and cathode layers are both infiltrated with 1-2 wt% BaO.

Electrochemical reduction tests are conducted with this cell by employing two test gases, namely test gas (A) comprising 1,000 ppm NO₂ + 8 vol.% O₂, and test gas (B) comprising 1,000 ppm NO + 8 vol.% O₂. The main component of the test gases (A) and (B) is argon (Ar). The flow rate through the porous electrochemical cell in all electrochemical reduction tests is 2 L/h. The polarizations in the tests are: (1) both negative and positive DC voltage from 1.25 to 2.5 V, or (2) square wave polarization in a frequency range of 0.008 to 1 Hz with a fixed amplitude of 2.25 V (± 2.25 V).

### Temperature dependency of the NOₓ conversion:

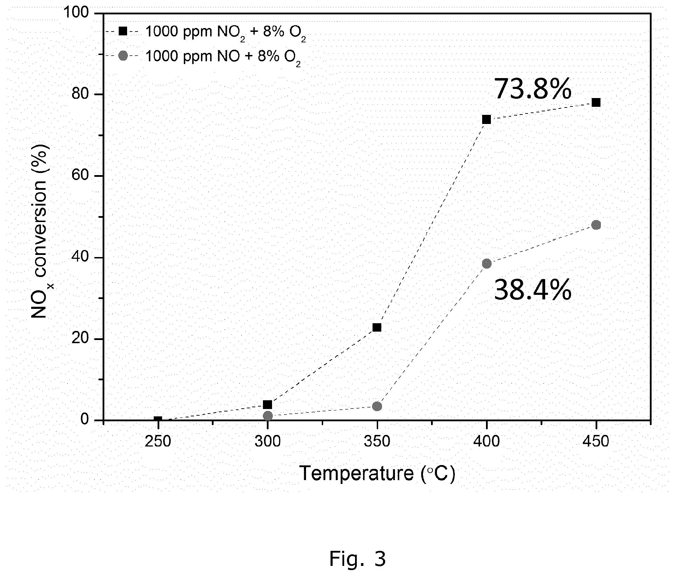

Figure 3 shows the temperature dependency of the NOₓ conversion (in vol.%) at temperatures between 250 to 450 °C at a voltage of 2.25 V by employing test gases (A) and (B). Said figure illustrates that the electrochemical cell shows a much faster reduction of nitrogen dioxide to nitrogen than the reduction of nitrogen monoxide to nitrogen. For instance, the increase in the NOₓ conversion at 400 °C was approximately 90%.

### Temperature dependency of the current efficiency:

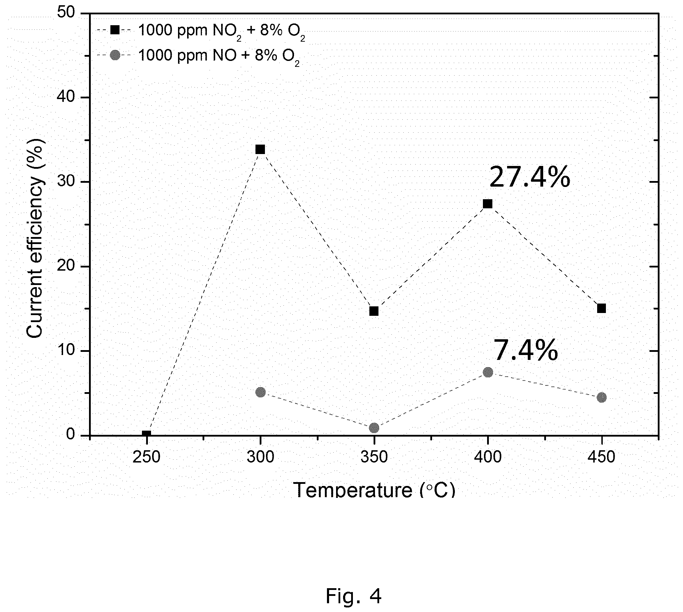

Figure 4 shows the temperature dependency of the current efficiency (in %) within a temperature range of 250-450°C, illustrating that the current efficiency is clearly improved by using test gas (A) instead of test gas (B). At 400 °C,the current efficiency increases by approximately 270%.

### Voltage dependency of the NOₓ conversion and the current efficiency:

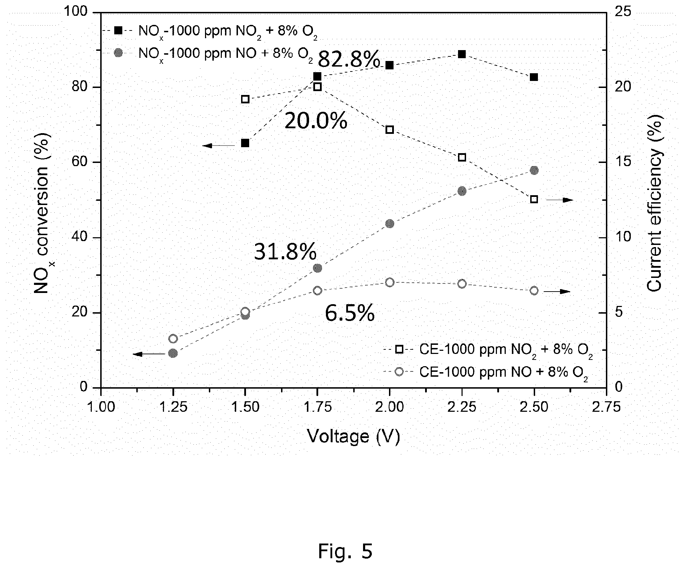

Figure 5 shows test results concerning the voltage dependency of the NOx conversion and the current efficiency of test gases (A) and (B) with polarization (1). As illustrated in Figure 5, the NOₓ purification properties of the electrochemical cell are significantly improved, when employing the NO₂ containing test gas (A), when compared to the NO containing test gas (B) at all tested voltages, especially at voltages of lower than 2 V.

### Frequency dependency of the NOₓ conversion:

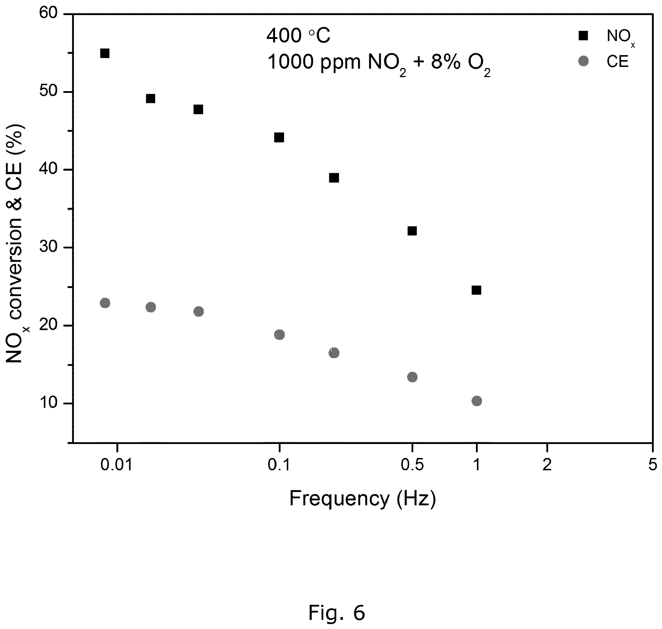

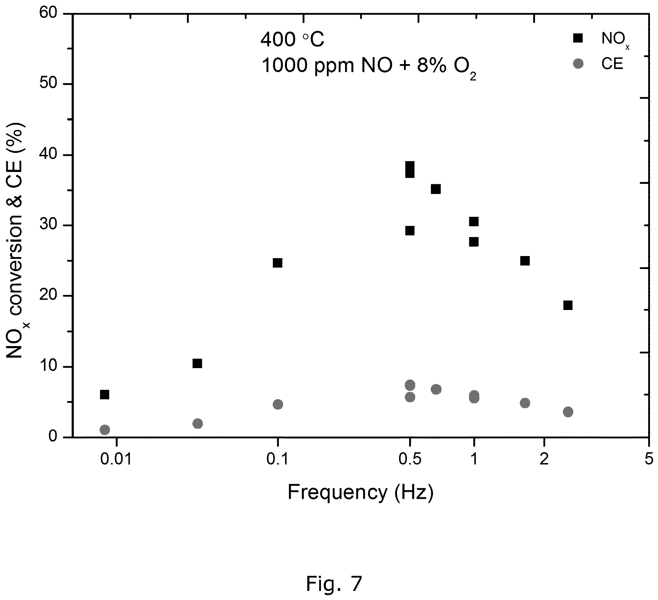

The frequency dependency is analyzed for the NOx conversion at a temperature of 400 °C with polarization (2). Figures 6 and 7 illustrate the results for test gases (A) and (B), respectively, clearly showing improved test results for test gas (A) at all measured frequencies.

## Claims

1. Method for purification of exhaust gas in a system, comprising an electrochemical cell,
wherein the electrochemical cell comprises at least three layers: a porous ceramic anode layer, a porous ceramic electrolyte layer and a porous ceramic cathode layer, in this order,
wherein the at least three layers of the cell comprise above 10 wt.% of the same ceramic material (SCM),
wherein the cell is free of noble metals,
wherein the porous ceramic cathode layer comprises an alkaline or alkaline-earth oxide or a mixture thereof,
wherein the porous ceramic anode layer comprises a ceramic with oxidizing properties, and
wherein the method comprises the following at least two steps:
- passing the exhaust gas through the porous ceramic anode layer in order to oxidize nitrogen monoxide to nitrogen dioxide; and
- subsequently passing the exhaust gas through the porous ceramic cathode layer in order to reduce nitrogen dioxide to nitrogen.

2. Method according to any of the preceding claims, wherein the at least three layers of the cell comprise 30, 50, 70 or 100 wt.% of SCM or
wherein the at least three layers of the cell comprise different amounts of SCM, such as 35 wt.% SCM in the anode layer, 35 wt.% SCM in the cathode layer, and 100 wt.% SCM in the electrolyte layer.

3. Method according to any of the preceding claims, wherein the anode layer and the cathode layer comprise composite materials, wherein one of the composite materials is the SCM.

4. Method according to any of the preceding claims, wherein the porous ceramic anode layer, in addition to a ceramic with oxidizing properties, comprises a catalytic material, such as Co₃O₄ and/or ZnFe₂O₄.

5. Method according to any of the preceding claims, wherein the purification of exhaust gas is carried out in a net oxidizing atmosphere, preferably in the presence of oxygen gas.

6. Method according to any of the preceding claims, wherein, in addition to the exhaust gas purification with respect to nitrogen oxides, carbon pollutants are oxidized at the anode side of the electrochemical cells to carbon dioxide.

7. Method according to any of the preceding claims, wherein the material of the porous ceramic electrolyte layer is selected among optionally doped zirconia, such as yttria-stabilized zirconia, doped ceria, LaGaO₃ based materials or Bi₂O₃ based materials.

8. Method according to any of the preceding claims, wherein the material of the porous ceramic anode layer and porous ceramic cathode layer is selected among oxide-based ceramic materials, preferably wherein the oxide-based ceramic material is selected from optionally doped zirconia, such as doped yttria-stabilized zirconia, or doped ceria.

9. System suitable for purification of exhaust gas, comprising an electrochemical cell comprising at least three layers: a porous ceramic anode layer, a porous ceramic electrolyte layer and a porous ceramic cathode layer, in this order, wherein the at least three layers of the cell comprise above 10 wt.% of the same ceramic material (SCM)
wherein the cell is free of noble metals,
wherein the porous ceramic cathode layer comprises an alkaline or alkaline-earth oxide or a mixture thereof, and
wherein the porous ceramic anode layer comprises a ceramic with oxidizing properties.

10. System according to claim 9, wherein the at least three layers of the cell comprise 30, 50, 70 or 100 wt.% of SCM or wherein the at least three layers of the cell comprise different amounts of SCM, such as 35 wt.% SCM in the anode layer, 35 wt.% SCM in the cathode layer, and 100 wt.% in the electrolyte layer.

11. System according to claims 9-10, wherein the anode layer and the cathode layer comprise composite materials, wherein one of the composite materials is the SCM, and/or wherein the porous ceramic anode layer, in addition to a ceramic with oxidizing properties, comprises a catalytic material, such as Co₃O₄ and/or ZnFe₂O₄.

12. System according to claims 9-11, wherein the material of the porous ceramic electrolyte layer is selected among optionally doped zirconia, such as yttria-stabilized zirconia, doped ceria, LaGaO₃ based materials or Bi₂O₃ based materials.

13. System according to claims 9-12, wherein the material of the porous ceramic cathode layer and porous ceramic anode layer is selected among oxide-based ceramic materials, and preferably wherein the oxide-based ceramic material is selected among optionally doped zirconia, such as yttria-stabilized zirconia, or doped ceria.

14. System in accordance with any of claims 9-13, wherein the electrochemical cell is provided in the form of a honeycomb, so that multiple cells are present.

15. Use of the system of any one of claims 9-14 as exhaust gas purification system, for example in an automotive engine, a ship engine in a purification system for industrial exhaustive gases or as exhaust gas purification system for private household heating systems, preferably diesel engines.

## Patentansprüche

1. Verfahren zur Reinigung von Abgas in einem System, umfassend eine elektrochemische Zelle,
wobei die elektrochemische Zelle mindestens drei Schichten umfasst: eine poröse keramische Anodenschicht, eine poröse keramische Elektrolytschicht und eine poröse keramische Kathodenschicht in dieser Reihenfolge,
wobei die mindestens drei Schichten der Zelle über 10 Gew.-% des gleichen keramischen Materials (SCM, same ceramic material) umfassen,
wobei die Zelle frei von Edelmetallen ist,
wobei die poröse keramische Kathodenschicht ein Alkali- oder Erdalkalioxid oder ein Gemisch davon umfasst,
wobei die poröse keramische Anodenschicht eine Keramik mit oxidierenden Eigenschaften umfasst und
wobei das Verfahren die folgenden mindestens zwei Schritte umfasst:
- Durchleiten des Abgases durch die poröse keramische Anodenschicht, um Stickstoffmonoxid zu Stickstoffdioxid zu oxidieren; und
- anschließendes Durchleiten des Abgases durch die poröse keramische Kathodenschicht, um Stickstoffdioxid zu Stickstoff zu reduzieren.

2. Verfahren nach einem der vorhergehenden Ansprüche, wobei die mindestens drei Schichten der Zelle 30, 50, 70 oder 100 Gew.-% SCM umfassen oder
wobei die mindestens drei Schichten der Zelle unterschiedliche Mengen an SCM umfassen, wie etwa 35 Gew.-% SCM in der Anodenschicht, 35 Gew.-% SCM in der Kathodenschicht und 100 Gew.-% SCM in der Elektrolytschicht.

3. Verfahren nach einem der vorhergehenden Ansprüche, wobei die Anodenschicht und die Kathodenschicht Verbundwerkstoffe umfassen, wobei eines der Verbundwerkstoffe das SCM ist.

4. Verfahren nach einem der vorhergehenden Ansprüche, wobei die poröse keramische Anodenschicht neben einer Keramik mit oxidierenden Eigenschaften ein katalytisches Material wie etwa Co₃O₄ und/oder ZnFe₂O₄ umfasst.

5. Verfahren nach einem der vorhergehenden Ansprüche, wobei die Reinigung des Abgases in einer netto oxidierenden Atmosphäre, vorzugsweise in Gegenwart von Sauerstoffgas, durchgeführt wird.

6. Verfahren nach einem der vorhergehenden Ansprüche, wobei neben der Abgasreinigung in Bezug auf Stickoxide Kohlenstoffschadstoffe auf der Anodenseite der elektrochemischen Zellen zu Kohlendioxid oxidiert werden.

7. Verfahren nach einem der vorhergehenden Ansprüche, wobei das Material der porösen keramischen Elektrolytschicht aus gegebenenfalls dotiertem Zirkonoxid, wie etwa Yttriumoxid-stabilisiertem Zirkonoxid, dotiertem Ceroxid, Materialien auf LaGaO₃-Basis oder Materialien auf Bi₂O₃-Basis ausgewählt wird.

8. Verfahren nach einem der vorhergehenden Ansprüche, wobei das Material der porösen keramischen Anodenschicht und der porösen keramischen Kathodenschicht aus keramischen Materialien auf Oxidbasis ausgewählt wird, wobei vorzugsweise das keramische Material auf Oxidbasis aus gegebenenfalls dotiertem Zirkonoxid, wie etwa dotiertem Yttriumoxid-stabilisiertem Zirkonoxid, oder dotiertem Ceroxid ausgewählt wird.

9. System, das zur Reinigung von Abgas geeignet ist, umfassend eine elektrochemische Zelle, die mindestens drei Schichten umfasst: eine poröse keramische Anodenschicht, eine poröse keramische Elektrolytschicht und eine poröse keramische Kathodenschicht in dieser Reihenfolge,
wobei die mindestens drei Schichten der Zelle über 10 Gew.-% des gleichen keramischen Materials (SCM, same ceramic material) umfassen,
wobei die Zelle frei von Edelmetallen ist,
wobei die poröse keramische Kathodenschicht ein Alkali- oder Erdalkalioxid oder ein Gemisch davon umfasst,
wobei die poröse keramische Anodenschicht eine Keramik mit oxidierenden Eigenschaften umfasst.

10. System nach Anspruch 9, wobei die mindestens drei Schichten der Zelle 30, 50, 70 oder 100 Gew.-% SCM umfassen oder wobei die mindestens drei Schichten der Zelle unterschiedliche Mengen an SCM umfassen, wie etwa 35 Gew.-% SCM in der Anodenschicht, 35 Gew.-% SCM in der Kathodenschicht und 100 Gew.-% SCM in der Elektrolytschicht.

11. System nach Anspruch 9-10, wobei die Anodenschicht und die Kathodenschicht Verbundwerkstoffe umfassen, wobei eines der Verbundwerkstoffe das SCM ist und/oder wobei die poröse keramische Anodenschicht neben einer Keramik mit oxidierenden Eigenschaften ein katalytisches Material wie etwa Co₃O₄ und/oder ZnFe₂O₄ umfasst.

12. System nach einem der Ansprüche 9-11, wobei das Material der porösen keramischen Elektrolytschicht aus gegebenenfalls dotiertem Zirkonoxid, wie etwa Yttriumoxid-stabilisiertem Zirkonoxid, dotiertem Ceroxid, Materialien auf LaGaO₃-Basis oder Materialien auf Bi₂O₃-Basis ausgewählt ist.

13. System nach Ansprüchen 9-12, wobei das Material der porösen keramischen Kathodenschicht und der porösen keramischen Anodenschicht aus keramischen Materialien auf Oxidbasis ausgewählt ist, wobei vorzugsweise das keramische Material auf Oxidbasis aus gegebenenfalls dotiertem Zirkonoxid, wie etwa Yttriumoxid-stabilisiertem Zirkonoxid, oder dotiertem Ceroxid ausgewählt ist.

14. System nach einem der Ansprüche 9-13, wobei die elektrochemische Zelle in Form einer Wabe bereitgestellt ist, so dass mehrere Zellen vorhanden sind.

15. Verwendung des Systems nach einem der Ansprüche 9-14 als Abgasreinigungssystem, zum Beispiel in einem Kraftfahrzeugmotor, einem Schiffsmotor, in einem Reinigungssystem für industrielle Abgase oder als Abgasreinigungssystem für private Heizsysteme im Haushalt, vorzugsweise Dieselmotoren.

## Revendications

1. Procédé de purification de gaz d'échappement dans un système, comprenant une cellule électrochimique,
dans lequel la cellule électrochimique comprend au moins trois couches : une couche d'anode en céramique poreuse, une couche d'électrolyte en céramique poreuse et une couche de cathode en céramique poreuse, dans cet ordre,
dans lequel les au moins trois couches de la cellule comprennent plus de 10 % en poids du même matériau céramique (SCM),
dans lequel la cellule est exempte de métaux nobles,
dans lequel la couche de cathode en céramique poreuse comprend un oxyde alcalin ou alcalino-terreux ou un mélange de ceux-ci, dans lequel la couche d'anode en céramique poreuse comprend une céramique ayant des propriétés oxydantes, et
dans lequel le procédé comprend au moins les deux étapes suivantes :
- le passage du gaz d'échappement à travers la couche d'anode en céramique poreuse afin d'oxyder le monoxyde d'azote en dioxyde d'azote ; et
- ensuite le passage du gaz d'échappement à travers la couche de cathode en céramique poreuse afin de réduire le dioxyde d'azote en azote.

2. Procédé selon l'une quelconque des revendications précédentes, dans lequel les au moins trois couches de la cellule comprennent 30, 50, 70 ou 100 % en poids de SCM ou dans lequel les au moins trois couches de la cellule comprennent des quantités différentes de SCM, comme 35 % en poids de SCM dans la couche d'anode, 35 % en poids de SCM dans la couche de cathode, et 100 % en poids de SCM dans la couche d'électrolyte.

3. Procédé selon l'une quelconque des revendications précédentes, dans lequel la couche d'anode et la couche de cathode comprennent des matériaux composites, dans lequel un des matériaux composites est le SCM.

4. Procédé selon l'une quelconque des revendications précédentes, dans lequel la couche d'anode en céramique poreuse, en plus d'une céramique ayant des propriétés oxydantes, comprend un matériau catalytique, comme Co₃O₄ et/ou ZnFe₂O₄.

5. Procédé selon l'une quelconque des revendications précédentes, dans lequel la purification du gaz d'échappement est réalisée dans une atmosphère oxydante pure, de préférence en présence d'oxygène gazeux.

6. Procédé selon l'une quelconque des revendications précédentes, dans lequel, en plus de la purification du gaz d'échappement en ce qui concerne les oxydes d'azote, les polluants carbonés sont oxydés du côté anode des cellules électrochimiques en dioxyde de carbone.

7. Procédé selon l'une quelconque des revendications précédentes, dans lequel le matériau de la couche d'électrolyte en céramique poreuse est sélectionné parmi une zircone facultativement dopée, comme une zircone stabilisée avec de l'oxyde d'yttrium, un oxyde de cérium dopé, des matériaux à base de LaGaO₃ ou des matériaux à base de Bi₂O₃.

8. Procédé selon l'une quelconque des revendications précédentes, dans lequel le matériau de la couche d'anode en céramique poreuse et de la couche de cathode en céramique poreuse est sélectionné parmi les matériaux céramiques à base d'oxyde, de préférence dans lequel le matériau céramique à base d'oxyde est sélectionné parmi une zircone facultativement dopée, comme une zircone stabilisée avec de l'oxyde d'yttrium, ou un oxyde de cérium dopé.

9. Système approprié pour la purification d'un gaz d'échappement, comprenant une cellule électrochimique comprenant au moins trois couches : une couche d'anode en céramique poreuse, une couche d'électrolyte en céramique poreuse et une couche de cathode en céramique poreuse, dans cet ordre,
dans lequel les au moins trois couches de la cellule comprennent plus de 10 % en poids du même matériau céramique (SCM),
dans lequel la cellule est exempte de métaux nobles,
dans lequel la couche de cathode en céramique poreuse comprend un oxyde alcalin ou alcalino-terreux ou un mélange de ceux-ci, et
dans lequel la couche d'anode en céramique poreuse comprend une céramique ayant des propriétés oxydantes.

10. Système selon la revendication 9, dans lequel les au moins trois couches de la cellule comprennent 30, 50, 70 ou 100 % en poids de SCM ou dans lequel les au moins trois couches de la cellule comprennent des quantités différentes de SCM, comme 35 % en poids de SCM dans la couche d'anode, 35 % en poids de SCM dans la couche de cathode, et 100 % en poids dans la couche d'électrolyte.

11. Système selon les revendications 9 à 10, dans lequel la couche d'anode et la couche de cathode comprennent des matériaux composites, dans lequel un des matériaux composites est le SCM, et/ou dans lequel la couche d'anode en céramique poreuse, en plus d'une céramique ayant des propriétés oxydantes, comprend un matériau catalytique, comme Co₃O₄ et/ou ZnFe₂O₄.

12. Système selon les revendications 9 à 11, dans lequel le matériau de la couche d'électrolyte en céramique poreuse est sélectionné parmi une zircone facultativement dopée, comme une zircone stabilisée avec de l'oxyde d'yttrium, un oxyde de cérium dopé, des matériaux à base de LaGaO₃ ou des matériaux à base de Bi₂O₃.

13. Système selon les revendications 9 à 12, dans lequel le matériau de la couche d'anode en céramique poreuse et de la couche de cathode en céramique poreuse est sélectionné parmi les matériaux céramiques à base d'oxyde, et de préférence dans lequel le matériau céramique à base d'oxyde est sélectionné parmi une zircone facultativement dopée, comme une zircone stabilisée avec de l'oxyde d'yttrium, ou un oxyde de cérium dopé.

14. Système selon l'une quelconque des revendications 9 à 13, dans lequel la cellule électrochimique est fournie sous la forme d'un nid d'abeilles, de sorte que de multiples cellules sont présentes.

15. Utilisation du système selon l'une quelconque des revendications 9 à 14 comme système de purification de gaz d'échappement, par exemple dans un moteur d'automobile, un moteur de bateau, dans un système de purification pour gaz d'échappement industriels ou comme système de purification de gaz d'échappement pour les systèmes de chauffage domestique privé, de préférence pour les moteurs diesels.
